# EUROPÄISCHE PATENTSCHRIFT

(11) **EP 4 311 230 B1**
(45) Veröffentlichungstag und Bekanntmachung des Hinweises auf die Patenterteilung: **03.12.2025**
(21) Anmeldenummer: 23184580.1
(22) Anmeldetag: 11.07.2023
(51) Int. Cl.: H04N 7/18, H04N 21/414, H04N 21/442, H04N 21/45

(54) **VORRICHTUNG UND VERFAHREN ZUM BEREITSTELLEN VON INFORMATIONEN UND UNTERHALTUNG IN EINEM KRAFTFAHRZEUG**
DEVICE AND METHOD FOR PROVIDING INFORMATION AND ENTERTAINMENT IN A MOTOR VEHICLE
DISPOSITIF ET PROCÉDÉ DE FOURNITURE D'INFORMATIONS ET DE DIVERTISSEMENT DANS UN VÉHICULE AUTOMOBILE

(30) Priorität: 22.07.2022 DE 102022207506
(43) Veröffentlichungstag der Anmeldung: 24.01.2024
(73) Patentinhaber: AUMOVIO Germany GmbH, 60488 Frankfurt am Main (DE)
(72) Erfinder: Gallner, Thomas, 60488 Frankfurt am Main (DE); Thom, Marc, Weybridge (GB); Avitabile, Antonio, Weybridge (GB); Dr. Köhler, Thorsten, 60488 Frankfurt am Main (DE)
(74) Vertreter: Aumovio Corporation

(56) Entgegenhaltungen:
- DE-A1- 102014 216 168
- DE-A1- 102018 133 442
- US-A1- 2022 126 864
- US-A1- 2022 224 963

## Beschreibung

Die Erfindung betrifft eine Vorrichtung und ein Verfahren zum Bereitstellen von Informationen und Unterhaltung in einem Fahrzeug, einem sogenannten "in Car Content".

Das erfindungsgemäße Verfahren kann sowohl bei autonom fahrenden Fahrzeugen als auch bei herkömmlichen Fahrzeugen Verwendung finden. Deshalb wird im folgenden Text von einem ersten Passagier gesprochen, der in herkömmlichen Fahrzeugen dem Kraftfahrer entspricht.

Aus dem Stand der Technik sind Rundfunkempfänger und Rundfunkempfang, sonstige Multimediageräte und deren Nutzung, online Streaming und Dienste mit einer einfachen Personalisierung, wie zum Beispiel Spotify für eine Nutzung in einem Kraftfahrzeug bekannt. Nachteilig ist es bei Rundfunkgeräten, dass eine Personalisierung nur stark eingeschränkt durch eine Auswahl von Rundfunksendern möglich ist, die gerade empfangen werden können und deren Reichweite begrenzt ist, so dass bei einer längeren Fahrt gegebenenfalls ein anderer Rundfunksender gesucht und ausgewählt werden muss. Sonstige Multimediageräte wie beispielsweise mp-3 Player können schon eine mehr den persönlichen Vorlieben eines ersten Passagiers, insbesondere des bei herkömmlichen Fahrzeugen erforderlichen Kraftfahrers und/oder seiner Passagiere entsprechen, sind aber fest vorgegeben und nur aufwändig zu ändern. Ähnliches gilt für online Streaming-Dienste, die zwar für verschiedene Musikgeschmacksrichtungen angeboten werden, aber nie perfekt auf einen Benutzer abgestimmt sein können. Schließlich kann man bei Streaming Diensten bestimmte Musikstücke aussuchen. Nachteil bei allen bekannten Verfahren ist es, dass der erste Passagier abgelenkt wird, wenn er während der Fahrt den Sender oder Playlists wechselt. Hierdurch steigt die Gefahr eines Unfalls bei nicht autonom fahrenden Fahrzeugen an. Nahezu unverantwortlich ist es für einen ersten Passagier bei einem nicht autonomen Fahrzeug, wenn er sich während der Fahrt Musikstücke aussucht und hierdurch so stark abgelenkt wird, dass die Gefahr eines Verkehrsunfalls stark ansteigt. Die DE 10 2014 216 168 A1 betrifft ein Verfahren und ein System zur Steuerung zumindest einer Kommunikationsausgabe einer Diensteinrichtung eines Kraftfahrzeugs. Die DE 10 2018 133 442 A1 betrifft ein Verfahren zum Ausgeben von Informationen in einem Fahrzeug, bei dem die aktuelle Fahrsituation des Fahrzeugs erfasst wird. Ferner betrifft die DE 10 2018 133 442 A1 eine Vorrichtung zum Steuern einer Ausgabe von Informationen in einem Fahrzeug mit einer Fahrsituations-Analyseeinheit zum Erfassen der aktuellen Fahrsituation des Fahrzeugs.

Aufgabe der Erfindung ist es, ein Verfahren anzugeben, bei dem der erste Passagier mit personalisierten Informationen und Unterhaltung versorgt wird, ohne dass er vom Verkehrsgeschehen abgelenkt wird. Diese Aufgabe wird durch ein Verfahren mit den Merkmalen des Patentanspruchs 1 gelöst. Vorteilhafte Ausgestaltungen sind den Unteransprüchen zu entnehmen.

Da in einem ersten Schritt die Bedingungen innerhalb des Aufenthaltsraums des Kraftfahrzeugs, die Umgebungsbedingungen um das Kraftfahrzeug und Betriebsparameter des Kraftfahrzeuges ermittelt werden, in einem zweiten Schritt Informationen über den Zustand eines ersten Passagiers ermittelt werden und in einem dritten Schritt die im ersten Schritt und zweiten Schritt ermittelten Informationen ausgewertet werden und aus dem Ergebnis Informationen und/oder Unterhaltung ausgewählt und für den ersten Passagier bereitgestellt werden ist es möglich, eine dem ersten Passagier genehme Information und / oder Unterhaltung bereitzustellen, da diese Information und / oder Unterhaltung der allgemeinen Situation des Kraftfahrzeuges und des ersten Passagiers, also eines Kraftfahrers bei Einsatz des erfindungsgemäßen Verfahrens in einem herkömmlichen Kraftfahrzeug angepasst ist. Als Information können beispielsweise Lernprogramme, Wetterberichte, politische Ereignisse oder Börsenkurse ausgegeben werden. Als Unterhaltung können beispielsweise Musikstücke oder Hörspiele bereitgestellt werden, die der Situation angepasst sind. Wird beispielsweise mittels einer Kamera erkannt, dass der Kraftfahrer ermüdet ist, wird man ihm aufregendere Musikstücke bereitstellen bzw. vorspielen. Wird erkannt, dass der Kraftfahrer aufgeregt ist, wird man eher beruhigende Musikstücke bereitstellen, also abspielen, um den Kraftfahrer zu beruhigen und ihn so für den Kraftfahrer unbewusst zu einem sicheren Fahrstil anregen.

Erfindungsgemäß werden in dem zweiten Schritt auch Informationen über den Zustand und /oder das Verhalten eventueller weiterer Passagiere ausgewertet. Dadurch kann die Auswahl der bereitzustellenden Informationen und oder Unterhaltung verbessert werden, da zum einen die Auswirkung der weiteren Passagiere auf den ersten Passagier in die Entscheidung mit einfließen, welche Informationen und /oder Unterhaltung bereitgestellt werden. Ist der Kraftfahrer beispielsweise durch das Verhalten der sonstigen Passagiere angespannt ist es sinnvoll, beruhigende Musikstücke bereitzustellen, um die Situation innerhalb des Kraftfahrzeuges zu entspannen und nicht weiter aufzuheizen.

Erfindungsgemäß werden in dem dritten Schritt auch Informationen über den Zustand eventueller weiterer Passagiere ausgewertet und aus dem Ergebnis Informationen und/oder Unterhaltung für den ersten Passagier und die weiteren Passagiere bereitgestellt. Durch die Zufriedenheit aller Passagiere kann die Situation innerhalb des Fahrzeuges von allen Passagieren positiv empfunden werden und so die Fahrsicherheit und der Komfort verbessert werden. Sind beispielsweise ein oder mehrere Kinder als weitere Passagiere vorhanden erscheint es sinnvoll, kindgerechte Informationen und/oder Unterhaltung, beispielsweise Kinderlieder oder Hörspiele für Kinder, bereitzustellen. Auch ist es möglich, den sonstigen Passagieren als Unterhaltung Videos oder Spiele anzubieten, dem ersten Passagier aber nur dann, wenn er auf absehbare Zeit keine aktiven Führungsaufgaben für das Kraftfahrzeug übernehmen muss, wenn also das Kraftfahrzeug sich in einem autonomen Fahrmodus befindet.

Sofern die Reaktionen des ersten Passagiers und eventueller weiterer Passagiere auf die bereitgestellten Informationen und/oder Unterhaltung ermittelt und in einem Speichermedium gespeichert werden und für eine nachfolgende Auswahl von bereitzustellender Information und/oder Unterhaltung berücksichtigt werden, kann die Auswahl von bereitzustellender Information und /oder Unterhaltung fortwährend verbessert werden, da das Verfahren erkennt, wie die einzelnen Informationen und /oder Unterhaltung auf den Passagier oder die Passagiere wirkt.

Wenn der erste Passagier beispielsweise über biometrische Merkmale identifiziert und die über ihn gespeicherten Informationen zugeordnet werden, kann bei einer nachfolgenden Nutzung des Verfahrens zu einem späteren Zeitpunkt bei einem Wiedererkennen des ersten Passagiers und/oder der weiteren Passagiere die für eine nachfolgende Auswahl von bereitzustellender Information und/oder Unterhaltung berücksichtigt werden und auf diese Weise verbessert werden.

Falls die Vorlieben des ersten Passagiers und /oder des /oder der weiteren Passagiere für Informationen und /oder Unterhaltung eingebbar sind ist die Auswahl der passenden angebotenen Information und /oder Unterhaltung vom Beginn der Anwendung des erfindungsgemäßen Verfahrens mit großer Wahrscheinlichkeit sichergestellt. Diese Eingabe kann beispielsweise manuell über eine Tastatur oder vokal über ein Spracherkennungssystem erfolgen.

Wenn im ersten Schritt auch Daten einer Landkarte ermittelt werden kann die Auswahl der auszugebenden Information und/oder Unterhaltung weiter verbessert werden.

Noch weiter verbessert werden kann das erfindungsgemäße Verfahren, wenn im ersten Schritt auch der aktuelle Standort des Kraftfahrzeuges und ein Ziel der aktuellen Fahrt ermittelt wird.

Wenn diese Fahrtstrecken abgespeichert werden und bei nachfolgenden erfindungsgemäßen Verfahren im zweiten Schritt berücksichtigt werden kann das gefundene Ergebnis weiter verbessert werden.

Sofern im ersten Schritt mindestens einer Zustände des Verkehrsflusses, in dem sich das Kraftfahrzeug befindet, der Fahraufgabe, der Navigationshinweise, der bereits benötigten Fahrzeit, der voraussichtlich benötigten Fahrzeit bis zum Ziel und /oder der gegenwärtige Aufenthaltsort des Kraftfahrzeuges erfasst werden kann die Auswahl der Information und /oder Unterhaltung noch weiter verbessert werden.

Wenn im ersten Schritt mindestens einer der Betriebsparameter: Fahrzeuggeschwindigkeit, Motordrehzahl, Energievorrat, Motoröltemperatur, Gierrate, Reifendruck oder Beschleunigung erfasst wird können diese Informationen auch dazu verwendet werden, um den Fahrstil des Kraftfahrers zu detektieren und beispielsweise bei aggressiver Fahrweise beruhigende Informationen und / oder Unterhaltung bereitgestellt werden.

Erfindungsgemäß umfasst die Auswertung im zweiten Schritt mindestens eine Information bezüglich der Müdigkeit, der Emotion, Stimmung, Erregung, Stress, Aufmerksamkeit, Trunkenheit, Alter und/oder Geschlecht der ersten Person. Dadurch kann die Bereitstellung der Information und/oder Unterhaltung weiter verbessert werden. Eine Information bezüglich der Müdigkeit, der Emotion, Stimmung, Erregung, Stress und /oder Aufmerksamkeit kann beispielweise anhand einer Auswertung eines Bildes des von einer im Kraftfahrzeug vorhandenen Kamera vorgenommen werden.

Erfindungsgemäß umfasst die Auswertung im zweiten Schritt über den Zustand der weiteren Personen mindestens eine Information über das Verhalten der weiteren Person, und über die Stimmung zwischen den Personen. Dadurch können das Verfahren sowie die Auswahl der bereitzustellenden Informationen und oder Unterhaltung weiter verbessert werden. Auch diese Information kann über eine oder mehrere Auswertungen von Bildern, die von einer oder mehrerer im Kraftfahrzeug vorhandenen Kameras generiert werden, erfolgen. Bei einem vorhandenen Mikrofon ist es auch oder zusätzlich möglich, per Spracherkennung den Inhalt der zwischen den Passagieren geführten Konversation auszuwerten und so auf die vorhandene Stimmung zu schließen.

Wenn im ersten Schritt mindestens einer der folgenden Tätigkeiten durchgeführt werden: Aufnehmen des Aufenthaltsraumes des Kraftfahrzeugs mittels einer 2D- oder 3D Kamera oder Radar oder Lidar, Aufnehmen von Geräuschen und/oder Ermitteln von Gasen im Aufenthaltsraum des Kraftfahrzeuges kann die Situation im Aufenthaltsraum noch genauer analysiert werden. So können beispielsweise unruhige Kinder ermittelt werden und das Angebot an Unterhaltung so ausgewählt werden, dass die unruhigen Kinder beruhigt werden.

Zusammenfassend lässt sich sagen, dass die Berücksichtigung von möglichst vielen Einflüssen, die sich auf das Wohlgefühl des ersten Passagiers und/oder der weiteren Passagiere auswirken, die Auswahl der bereitgestellten Information und /oder Unterhaltung verbessern hilft.

Das vorstehend beschriebene Verfahren kann in einem im Kraftfahrzeug vorhandenen Multimediasystem verwendet werden. Es ist auch möglich, dass es in einem tragbaren Gerät, beispielsweise einem Smartphone, verwendet wird, wenn dieses tragbare Gerät die erforderlichen Informationen entweder selbst(in das Gerät eingebaute Kamera und/oder Mikrophon, GPS-Sensor) generiert oder von den im Fahrzeug verbauten Sensoren inklusive Kamera oder Kameras erhalten kann, indem es per Steckverbindung, Kabel oder kabellos, beispielsweise über Bluetooth oder Wifi, mit dem Fahrzeug verbunden ist und die Verbindung zu den einzelnen Sensoren beispielsweise über ein Bussystem des Fahrzeugs oder Einzelleitungen des Fahrzeugs verbunden ist erhält und auswertet und die erhaltenen Ergebnisse über das Multimediasystem des Kraftfahrzeuges abspielt.

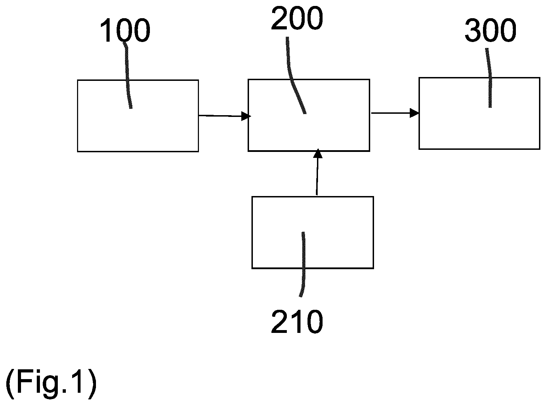

Ein Ausführungseispiel des erfindungsgemäßen Verfahrens wird nachfolgend anhand der Figur 1 näher erläutert.

Man erkennt einen ersten Schritt 100, einen zweiten Schritt 200 mit einem Speicherausleseschritt 210 und einen dritten Schritt 300.

Im ersten Schritt 100 werden möglichst viele aktuelle Daten wie zuvor beschrieben erhoben, beispielsweise mittels einer oder mehrerer Kameras, eines oder mehrerer Mikrofone , eines oder mehrerer Temperatursensoren, eines oder mehrerer Drucksensoren und /oder Gasüberwachungssensoren jeweils zur Überwachung des Aufenthaltsraums des Kraftfahrzeuges, ein oder mehrere Kameras , ein oder mehrere Thermometer, ein GPS System und /oder ein Navigationssystem jeweils zur Überwachung der Umgebung des Kraftfahrzeuges und die im Kraftfahrzeug vorliegenden aktuellen Betriebsdaten des Kraftfahrzeuges. Im zweiten Schritt 200 werden diese ermittelten Daten ausgewertet, beispielsweise wird die Anzahl und das Verhalten der im Aufenthaltsraum vorhandenen Passagiere ermittelt, beispielsweise durch eine Bildauswertung aus den vorhandenen Aufnahmen des Innenraums, der Auswertung der aufgenommenen Geräusche oder der Auswertung von in Sitzen des Kraftfahrzeuges vorhandenen Drucksensoren. Sofern vorhanden werden auch die für den ersten Passagier und /oder weitere Passagiere bereits vorhandenen Daten im Schritt 210 ausgelesen und bei der Auswertung der aktuell ermittelten Daten berücksichtigt. Die im Schritt 210 ausgelesenen Daten können solche von Vorlieben des ersten Passagiers und /oder der weiteren Passagiere für bestimmte Musikstile, Musikstücke und oder bevorzugte Informationsinhalte umfassen. Eine persönliche Zuordnung der Passagiere ist beispielsweise durch eine biometrische Erfassung und Bestimmung möglich. Bei personifizierten Zugangssystemen zu dem Kraftfahrzeug ist eine Zuordnung auch über diese Systeme möglich. Die im Schritt 210 ausgelesenen Daten können auch sonstige frühere Ereignisse umfassen, wie beispielsweise die von einzelnen Kraftfahrern, die das das Kraftfahrzeug benutzt haben, zurückgelegten Strecken. Die im Schritt 210 ausgelesenen Daten können dann zur Auswertung der aktuellen Daten berücksichtigt werden, so dass das Ergebnis voraussichtlich noch besser wird. Im Schritt 300 werden dann die im Schritt 200 ermittelten Ergebnisse den Passagieren bereitgestellt, beispielsweise Musikstücke abgespielt oder akustische Informationen dargeboten. Für Passagiere, die auf absehbare Zeit keine Führungsaufgaben des Kraftfahrzeuges übernehmen müssen, können auch Videos oder Computerspiele bereitgestellt werden.

## Patentansprüche

1. Verfahren zum Bereitstellen von Informationen und Unterhaltung in einem Kraftfahrzeug,
wobei in einem ersten Schritt (100) die Bedingungen innerhalb des Aufenthaltsraums des Kraftfahrzeugs, die Umgebungsbedingungen um das Kraftfahrzeug und Betriebsparameter des Kraftfahrzeuges ermittelt werden, wobei in einem zweiten Schritt (200) Informationen über den Zustand eines ersten Passagiers ausgewertet und aus dem Ergebnis Informationen und/oder Unterhaltung ausgewählt werden
wobei in einem dritten Schritt (300) die im zweiten Schritt (200) ausgewählte Information und /oder Unterhaltung für den ersten Passagier bereitgestellt werden, wobei die Auswertung im zweiten Schritt (200) mindestens eine Information bezüglich der Müdigkeit, der Emotion, Stimmung, Erregung, Stress, Aufmerksamkeit, Trunkenheit, Alter und/oder Geschlecht der ersten Person umfasst, wobei in dem zweiten Schritt (200) auch Informationen über den Zustand und /oder das Verhalten eventueller weiterer Passagiere ausgewertet werden, **dadurch gekennzeichnet, dass** die Auswertung im zweiten Schritt (200) über den Zustand der weiteren Personen mindestens eine Information über das Verhalten der weiteren Personen, und über die Stimmung zwischen den Personen umfasst, und dass in dem dritten Schritt (300) aus dem Ergebnis der Auswertung im zweiten Schritt (200) Informationen und/oder Unterhaltung für den ersten Passagier und die weiteren Passagiere bereitgestellt werden.

2. Verfahren zum Bereitstellen von Informationen und Unterhaltung in einem Kraftfahrzeug nach Patentanspruch 1, **dadurch gekennzeichnet, dass** die Reaktionen des ersten Passagier und eventueller weiterer Passagiere auf die bereitgestellten Informationen und/oder Unterhaltung ermittelt und in einem Speichermedium gespeichert werden und für eine nachfolgende Auswahl von bereitzustellender Information und/oder Unterhaltung durch einen Speicherausleseschritt (210) berücksichtigt werden.

3. Verfahren zum Bereitstellen von Informationen und Unterhaltung in einem Kraftfahrzeug nach Patentanspruch 2, **dadurch gekennzeichnet, dass** der erste Passagier identifiziert und den nach Patentanspruch 4 gespeicherten Informationen zugeordnet wird, die für eine nachfolgende Auswahl von bereitzustellender Information und/oder Unterhaltung durch einen Speicherausleseschritt berücksichtigt werden.

4. Verfahren zum Bereitstellen von Informationen und Unterhaltung in einem Kraftfahrzeug nach einem der vorstehenden Patentansprüche, **dadurch gekennzeichnet, dass** Vorlieben des ersten Passagiers und /oder des /oder der weiteren Passagiere für Informationen und /oder Unterhaltung eingebbar sind.

5. Verfahren zum Bereitstellen von Informationen und Unterhaltung in einem Kraftfahrzeug nach einem der vorstehenden Patentansprüche, **dadurch gekennzeichnet, dass** im ersten Schritt (100) auch Daten einer Landkarte ermittelt werden.

6. Verfahren zum Bereitstellen von Informationen und Unterhaltung in einem
Kraftfahrzeug nach Patentanspruch 5, **dadurch gekennzeichnet, dass** im ersten Schritt auch der aktuelle Standort des Kraftfahrzeuges und ein Ziel der aktuellen Fahrt ermittelt wird.

7. Verfahren zum Bereitstellen von Informationen und Unterhaltung in einem Kraftfahrzeug nach Patentanspruch 6, **dadurch gekennzeichnet, dass** die Fahrtstrecken abgespeichert werden und bei nachfolgenden erfindungsgemäßen Verfahren durch einen Speicherausleseschritt (210) berücksichtigt werden.

8. Verfahren zum Bereitstellen von Informationen und Unterhaltung in einem Kraftfahrzeug nach einem der vorstehenden Patentansprüche, **dadurch gekennzeichnet, dass** im ersten Schritt (100) mindestens einer Zustände des Verkehrsflusses, in dem sich das Kraftfahrzeug befindet, der Fahraufgabe, der Navigationshinweise, der bereits benötigten Fahrzeit, der voraussichtlich benötigten Fahrzeit bis zum Ziel und /oder der gegenwärtige Aufenthaltsort des Kraftfahrzeuges erfasst werden.

9. Verfahren zum Bereitstellen von Informationen und Unterhaltung in einem Kraftfahrzeug nach einem der vorstehenden Patentansprüche, **dadurch gekennzeichnet, dass** im ersten Schritt (100) mindestens einer der Betriebsparameter: Fahrzeuggeschwindigkeit, Motordrehzahl, Energievorrat, Motoröltemperatur, Gierrate, Reifendruck oder Beschleunigung erfasst wird.

10. Verfahren zum Bereitstellen von Informationen und Unterhaltung in einem Kraftfahrzeug nach einem der vorstehenden Patentansprüche, **dadurch gekennzeichnet, dass** im ersten Schritt (100) mindestens einer der folgenden Tätigkeiten durchgeführt werden: Aufnehmen des Aufenthaltsraumes des Kraftfahrzeugs mittels einer 2D- oder 3D Kamera oder Radar oder Lidar, Aufnehmen von Geräuschen und/oder Ermitteln von Gasen im Aufenthaltsraum des Kraftfahrzeuges.

## Claims

1. A method for providing information and entertainment in a motor vehicle,
wherein in a first step (100) the conditions within the occupied space of the motor vehicle, the ambient conditions around the motor vehicle and operating parameters of the motor vehicle are determined, wherein in a second step (200) information on the condition of a first passenger is evaluated and information and/or entertainment is selected from the result wherein in a third step (300) the information and/or entertainment selected in the second step (200) is provided for the first passenger, wherein the evaluation in the second step (200) comprises at least one information on the tiredness, emotion, mood, arousal, stress, attention, drunkenness, age and/or sex of the first person, wherein in the second step (200) information on the condition and/or behaviour of optional further passengers is evaluated as well, **characterised in that** the evaluation in the second step (200) on the condition of the further persons comprises at least one information on the behaviour of the further persons and on the mood between the persons, and **in that** in the third step (300) information and/or entertainment is provided for the first passenger and the further passengers from the result of the evaluation in the second step (200).

2. The method for providing information and entertainment in a motor vehicle according to claim 1, **characterised in that** the reactions of the first passenger and of optional further passengers to the provided information and/or entertainment are determined and stored in a storage medium and are taken into account for a subsequent selection of information and/or entertainment to be provided through a memory readout step (210).

3. The method for providing information and entertainment in a motor vehicle according to claim 2, **characterised in that** the first passenger is identified and assigned to the information stored according to claim 4, which is taken into account for a subsequent selection of information and/or entertainment to be provided through a memory readout step.

4. The method for providing information and entertainment in a motor vehicle according to any one of the preceding claims, **characterised in that** preferences of the first passenger and/or of the one or more further passengers can be entered for information and/or entertainment.

5. The method for providing information and entertainment in a motor vehicle according to any one of the preceding claims, **characterised in that** data from a map are also determined in the first step (100).

6. The method for providing information and entertainment in a motor vehicle according to claim 5, **characterised in that** the current location of the motor vehicle and a destination of the current journey are also determined in the first step.

7. The method for providing information and entertainment in a motor vehicle according to claim 6, **characterised in that** the routes are stored and taken into account in subsequent methods according to the invention through a memory readout step (210).

8. The method for providing information and entertainment in a motor vehicle according to any one of the preceding claims, **characterised in that** in the first step (100) at least one of the conditions of the traffic flow in which the motor vehicle is located, the driving task, the navigation instructions, the travel time already required, the presumably required travel time to the destination and/or the current location of the motor vehicle are acquired.

9. The method for providing information and entertainment in a motor vehicle according to any one of the preceding claims, **characterised in that** in the first step (100) at least one of the operating parameters of vehicle speed, engine speed, energy supply, engine oil temperature, yaw rate, tire pressure or acceleration is acquired.

10. The method for providing information and entertainment in a motor vehicle according to any one of the preceding claims, **characterised in that** in the first step (100) at least one of the following actions is carried out: recording the occupied space of the motor vehicle by means of a 2D or 3D camera or radar or lidar, recording sounds and/or determining gases in the occupied space of the motor vehicle.

## Revendications

1. Procédé de fourniture d'informations et de divertissement dans un véhicule automobile,
dans lequel, dans une première étape (100), les conditions à l'intérieur de l'habitacle du véhicule automobile, les conditions environnementales autour du véhicule automobile et les paramètres de fonctionnement du véhicule automobile sont déterminés ; dans lequel, dans une deuxième étape (200), des informations relatives à l'état d'un premier passager sont évaluées, et à partir du résultat, des informations et/ou du divertissement sont sélectionnés
dans lequel, dans une troisième étape (300), l'information et/ou le divertissement sélectionnés dans la deuxième étape (200) sont fournis au premier passager, dans lequel l'évaluation dans la deuxième étape (200) comprend au moins une information concernant la fatigue, l'émotion, l'ambiance, l'excitation, le stress, l'attention, l'ivresse, l'âge et/ou le sexe de la première personne, dans lequel, dans la deuxième étape (200), des informations sur l'état et/ou le comportement d'éventuels autres passagers sont également évaluées, **caractérisé en ce que** l'évaluation dans la deuxième étape (200) sur l'état des autres personnes comprend au moins une information sur le comportement des autres personnes et sur l'ambiance entre les personnes, et **en ce que**, dans la troisième étape (300), sur la base du résultat de l'évaluation dans la deuxième étape (200), des informations et/ou du divertissement sont fournis au premier passager ainsi qu'aux autres passagers.

2. Procédé de fourniture d'informations et de divertissement dans un véhicule automobile selon la revendication 1, **caractérisé en ce que** les réactions du premier passager et d'éventuels autres passagers aux informations fournies et/ou au divertissement fourni sont déterminées et stockées dans un support de stockage et sont prises en compte pour une sélection ultérieure d'informations et/ou de divertissement à fournir par une étape de lecture de mémoire (210).

3. Procédé de fourniture d'informations et de divertissement dans un véhicule automobile selon la revendication 2, **caractérisé en ce que** le premier passager est identifié et associé aux informations stockées selon la revendication 4, qui sont prises en compte pour une sélection ultérieure d'informations et/ou de divertissement à fournir par une étape de lecture de mémoire.

4. Procédé de fourniture d'informations et de divertissement dans un véhicule selon l'une quelconque des revendications précédentes, **caractérisé en ce que** les préférences du premier passager et/ou de l'autre passager / des autres passagers peuvent être saisies pour des informations et/ou du divertissement.

5. Procédé de fourniture d'informations et de divertissement dans un véhicule selon l'une quelconque des revendications précédentes, **caractérisé en ce que**, dans la première étape (100), des données d'une carte sont également déterminées.

6. Procédé de fourniture d'informations et de divertissement dans un véhicule selon la revendication 5, **caractérisé en ce que**, dans la première étape, la position actuelle du véhicule et une destination du trajet actuel sont également déterminées.

7. Procédé de fourniture d'informations et de divertissement dans un véhicule automobile selon la revendication 6, **caractérisé en ce que** les trajets sont mémorisés et sont pris en compte lors des procédés suivants selon l'invention par une étape de lecture dans la mémoire (210).

8. Procédé de fourniture d'informations et de divertissement dans un véhicule automobile selon l'une quelconque des revendications précédentes, **caractérisé en ce que**, dans la première étape (100), au moins un état du flux de circulation dans lequel se trouve le véhicule automobile, de la tâche de conduite, des indications de navigation, du temps de conduite déjà nécessaire, du temps de conduite probablement nécessaire jusqu'à la destination et/ou de l'emplacement actuel du véhicule automobile est saisi.

9. Procédé de fourniture d'informations et de divertissement dans un véhicule selon l'une quelconque des revendications précédentes, **caractérisé en ce que**, dans la première étape (100), au moins l'un des paramètres de fonctionnement suivants est détecté : vitesse du véhicule, régime du moteur, réserve d'énergie, température d'huile moteur, taux d'embardée, pression de gonflage des pneus ou accélération.

10. Procédé de fourniture d'informations et de divertissement dans un véhicule automobile selon l'une quelconque des revendications précédentes, **caractérisé en ce que**, dans la première étape (100), au moins l'une des opérations suivantes est effectuée : enregistrement de l'habitacle du véhicule automobile au moyen d'une caméra 2D ou 3D ou d'un radar ou d'un lidar, enregistrement de bruits et/ou détection de gaz dans l'habitacle du véhicule automobile.
